# EUROPEAN PATENT APPLICATION

(11) **EP 4 667 062 A1**
(43) Date of publication of application: **24.12.2025**
(21) Application number: 23923006.3
(22) Date of filing: 07.04.2023
(51) Int. Cl.: A62C 31/22, A62C 31/28, A62C 35/68, A62C 3/00, B23B 39/04, B23B 47/28, B24C 5/06

(54) **WATER DRILL LANCE FOR EXTINGUISHING FIRE IN CONTAINER**

(30) Priority: 15.02.2023 KR 20230020378
(71) Applicant: Tanktech Co., Ltd., Saha-gu Busan 49454 (KR)
(72) Inventor: JI, Tae Ho, Busan 49454 (KR); YOUM, Dong Hun, Busan 49454 (KR); NA, Il Do, Busan 49454 (KR); HEO, Jung Hun, Busan 49454 (KR); LEE, Kyeong Min, Busan 49454 (KR)
(74) Representative: Mooser, Sebastian Thomas
(86) International application number: PCT/KR2023/004708
(87) International publication number: WO 2024/172204

(57) **Abstract**

The present invention relates to a water drill lance for extinguishing a fire in a container, which, when a fire occurs in a container, can extinguish the fire by automatically drilling a fire-extinguishing hole through a container door by means of a hydraulic pressure and then spraying water into the container, and can quickly extinguish a fire regardless of the height of containers stacked in multiple layers through vertical height adjustment.

## Description

### Technical Field

The present disclosure relates to a water drill lance for extinguishing a fire in a container. More particularly, the present disclosure relates to a water drill lance for extinguishing a fire in a container, the water drill lance being capable of extinguishing a fire by automatically forming a fire-extinguishing hole in a container door by using hydraulic pressure and then spraying water through the fire-extinguishing hole when the fire occurs in the container, and the water drill lance being configured such that a vertical height thereof is capable of being adjusted, thereby being capable of rapidly extinguishing a fire regardless of a height of a plurality of stacked containers.

### Background Art

Recently, container carriers have become supersized for large-scale maritime logistics, and cargo carried on container ships enters the container and the container is sealed and closed. Accordingly, a fire may occur in the container during maritime transportation regardless of a hull part due to the exothermic reaction of impact, friction, static electricity, spontaneous ignition, and mixed ignition of an internal material, and an exothermic reaction of water-prohibiting substances caused by rainwater and other moisture.

According to a Heat Release Rate (HRR) according to the material characteristics, the fire inside the container differs in heat and smoke that are emitted. Furthermore, due to the structural characteristics of the inside of the container, it is difficult to detect the fire, and crew, fire boats, and firefighting aircrafts cannot inject foam, seawater, and powdered chemicals for fire suppression to the inside of the container. Therefore, the fire is prolonged, and in a case of a fire of chemical substances and industrial products with high calorific value, heat emitted during the fire is transferred to adjacent containers through conduction, convection, and radiation, which cause a major cause of damage.

In order to extinguish such a fire, conventionally, a worker directly perforates a container door by using a hammer, and then injected a lance for spraying water into the perforated hole to extinguish the fire. In the process of perforating the container door formed of steel, a lot of time and labor are required. Furthermore, there was a problem that the worker was exposed to a risk of fire and explosion because the worker is required to perform a manual operation next to the container that emits a huge amount of heat and smoke when a fire occurs.

In addition, when a fire occurs in a container that is loaded in a plurality of layers and is positioned at a high position, a worker is required to mount a ladder corresponding to a height of the corresponding container and to climb the ladder and then to perforate the container door, so that the worker is exposed to various risks.

Particularly, even when a worker forms a hole by using the hammer, it is very difficult and dangerous for the worker to directly inject the lance for spraying water in a situation in which enormous heat is emitted through the hole. Therefore, a technology capable of safely extinguishing a fire without the worker directly performing such a fire suppression is required.

### Disclosure

### Technical Problem

Accordingly, the present disclosure has been made keeping in mind the above problems occurring in the related art, and an objective of the present disclosure is to provide a water drill lance for extinguishing a fire in a container, the water drill lance being capable of extinguishing a fire by automatically forming a fire-extinguishing hole in a container door through hydraulic pressure and then spraying water through the fire-extinguishing hole when the fire occurs in the container, and the water drill lance being configured such that a vertical height thereof is capable of being adjusted, thereby being capable of rapidly extinguishing a fire regardless of a height of a plurality of stacked containers.

### Technical Solution

According to an aspect of the present disclosure, there is provided a water drill lance for extinguishing a fire in a container, the water drill lance including: a clamp body 110 configured to be brought into close contact with a container door; a lock hook assembly 120 provided on the clamp body 110, the lock hook assembly 120 being configured such that the lock hook assembly 120 is fixed to or released from a locking rod of the container by being rotated; a drill module 130 provided on the clamp body 110, the drill module 130 being configured to form a hole in the container door by using water injected from outside and to spray water inside the container through the hole; and a lance support 140 connected to the clamp body 110, the lance support 140 being configured to be connected to an external lifting pole capable of performing a height adjustment.

According to an aspect, an accommodating groove 111 for accommodating the locking rod in a longitudinal direction of the locking rod may be formed in the clamp body 110.

According to an aspect, the lock hook assembly 120 may include: a rotation guide 121 provided on an inner side surface of the clamp body 110; a lock hook 122 connected to the rotation guide 121 by a shaft, the lock hook 123 being configured to be locked on and released from the locking rod by being rotated; a shaft 123 connected to the lock hook 122 and configured to push or pull the lock hook 122; and a trigger 124 having a first side end portion connected to the shaft 123 and having a center portion connected to the clamp body 110 by a shaft, the trigger 124 being configured to push or pull the shaft 123 according to a direction in which a second side end portion of the trigger 124 is rotated, and wherein, as the trigger 124 is rotated from an upper side position to a lower side position, the shaft 123 may push the lock hook 122, and the lock hook 122 may be rotated with respect to the rotation guide 121, so that the lock hook 122 may be locked on the locking rod.

According to an aspect, a wire for pulling the trigger 124 downward may be connected to the second side end portion of the trigger 124.

According to an aspect, the lance support 140 may be provided with a locking mechanism 141 that protrudes on a first side of the lance support 140 such that the locking mechanism 141 is positioned below the trigger 124, and the lance support 140 may be configured to be rotated at a predetermined angle with respect to the clamp body 110 in a state in which the lance support 140 is connected to the clamp body 110. Furthermore, when the lance support 140 is rotated, the locking mechanism 141 may push the second side end portion of the trigger 124 upward, and the shaft 123 may pull the lock hook 122, so that the lock hook 122 may be rotated with respect to the rotation guide 121 and may be released from the locking rod.

According to an aspect, the drill module 130 may include: a housing 131 in which water is injected therein; an impeller 132 provided in the housing 131 and configured to generate a rotational force by being rotated by water that is injected into the housing 131; a center drill 133 connected to the impeller 132, the center drill 133 being configured to form a center hole in the container door by the rotational force of the impeller 132 while being in a state in which the center drill 133 is in close contact with the container door; a hole cutter 134 connected to the impeller 132 and configured to form a fire-extinguishing hole for injecting water into the container by the rotational force of the impeller 132; a bearing cover 135 covering a bearing provided between the housing 131 and the impeller 132; and a drill guide shaft 136 connected to the center drill 133.

According to an aspect, a pair of sliding guides 112 that protrudes toward the housing 131 may be formed on an outer side of the clamp body 110, wherein a pair of slide wings 131a coupled to the pair of sliding guides 112 may be formed on an outer side of the housing 131, and wherein, in a state in which the pair of slide wings 131a is coupled to the pair of sliding guides 112, the drill module 130 may be configured to be slidably moved along the pair of sliding guides 112 such that the drill module 130 is moved away from or moved close to the clamp body 110.

According to an aspect, a guide channel 112a preventing the housing 131 from being separated from the pair of sliding guides 112 may be provided on distal end portions of the pair of sliding guides 112.

According to an aspect, an elastic body may be provided between the guide channel 112a and the pair of slide wings 131a, and wherein a state in which the housing 131 is in close contact with the clamp body 110 may be maintained by an elastic force of the elastic body.

According to an aspect, when the clamp body 110 is brought into close contact with the container door, the center drill 133 may be brought into contact with the container door, and the housing 131 may be spaced apart from the clamp body 110. Furthermore, in a process in which the container door is perforated by the center drill 133 and the hole cutter 134, a separation distance between the housing 131 and the clamp body 110 may be gradually reduced and the housing 131 may be brought into close contact with the clamp body 110 by the elastic force of the elastic body.

According to an aspect, a drain hole 131b for discharging water injected into the housing 131 to the outside when the impeller 132 is rotated may be provided on a lower side of the housing 131.

According to an aspect, a drain plate 113 may be provided on the outer side of the clamp body 110, the drain plate 113 being configured to block the drain hole 131b when the separation distance between the housing 131 and the clamp body 110 is gradually reduced and the housing 131 is brought into close contact with the clamp body 110 by the elastic force of the elastic body during the process in which the container door is perforated by the center drill 133 and the hole cutter 134, thereby guiding water injected into the housing 131 not to be discharged through the drain hole 131b but to be injected inside the container through the fire-extinguishing hole.

### Advantageous Effects

According to the present disclosure, there is an advantage that the fire is capable of being extinguished by automatically forming the fire-extinguishing hole in the container through the hydraulic pressure and then spraying water through the fire-extinguishing hole even if the worker does not use a hammer to perforate the container door.

In addition, according to the present disclosure, since the vertical height adjustment is capable of being performed, there is an advantage that the fire is capable of being rapidly extinguished regardless of the height of the plurality of stacked containers.

Particularly, according to the present disclosure, there is an advantage that the fire is capable of being safely extinguished without the worker performing a task such as perforating the container door, spraying water, and so on.

### Description of Drawings

FIG. 1 is a view illustrating a structure of a water drill lance 100 for extinguishing a fire in a container according to an embodiment of the present disclosure.
FIG. 2 is a view illustrating a clamp body 110 in more detail.
FIG. 3 is a view illustrating a process in which a lock hook assembly 120 is fixed to or released from a locking rod.
FIG. 4 is a view illustrating a drill module 130 in more detail.
FIG. 5 is a view illustrating a process in which a hole is formed in a container door by the drill module 130.
FIG. 6 is a view illustrating a structure of a lifting pole device 200 for adjusting a height of a water drill lance.
FIG. 7 is a view illustrating a lifting pole 210 and a lock bar 211 in more detail.
FIG. 8 is a view illustrating a state in which the lock bar 211 is fixed to a handrail.
FIG. 9 is a view illustrating a process of adjusting a height of the lifting pole 210 by using a lifting handle 230.
FIG. 10 is a view sequentially illustrating an overall process of extinguishing a fire in a container by using the water drill lance for extinguishing the fire in the container.

### <Description of Reference Numerals>

100: Water drill lance for extinguishing a fire in a container
110: Clamp body
111: Accommodating groove
112: Sliding guide
112a: Guide channel
113: Drain plate
120: Lock hook assembly
121: Rotation guide
122: Lock hook
123: Shaft
124: Trigger
130: Drill module
131: Housing
131a: Slide wing
131b: Drain hole
132: Impeller
133: Center drill
134: Hole cutter
135: Bearing cover
136: Drill guide shaft
140: Lance support
141: Locking mechanism
200: Lifting pole device for adjusting a height of a water drill lance
210: Lifting pole
210a: Gear groove
211: Lock bar
211a: Fixing bracket
220: Gear assembly
230: Lifting handle

### Mode for Invention

Hereinafter, exemplary embodiments of the present disclosure will be described in detail with reference to the accompanying drawings so that those skilled in the art can easily implement the present disclosure. The present disclosure is not limited to the exemplary embodiments described herein and may be embodied in many different forms.

In order to clearly describe the present disclosure, parts irrelevant to the description are omitted, and the same reference numerals designate the same or similar components throughout the specification.

In addition, in various exemplary embodiments, components having the same configuration will be described only in representative exemplary embodiments by using the same reference numerals, and in other exemplary embodiments, only configurations different from the representative exemplary embodiments will be described.

Throughout the specification, it will be understood that when an element is referred to as being "connected" to another element, it can be directly connected to the other element or it can be "indirectly connected" with the other element and intervening elements may be present therebetween. In addition, when it is mentioned that a part "includes" a certain component, this means that any other component(s) may be further included, rather than excluding any other component(s), unless otherwise stated.

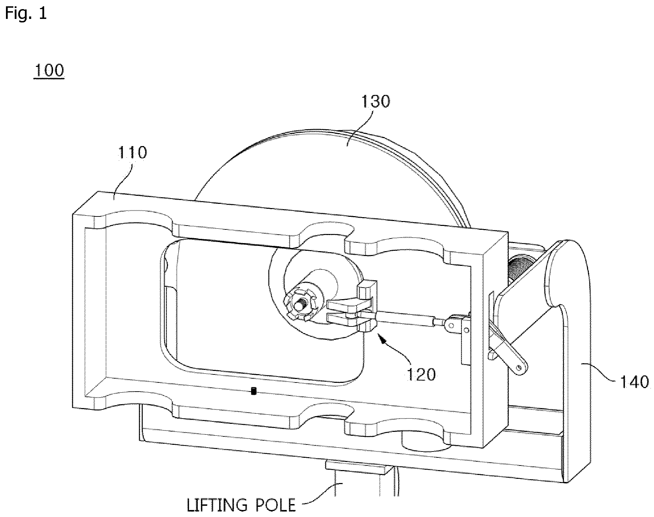

FIG. 1 is a view illustrating a structure of a water drill lance 100 for extinguishing a fire in a container according to an embodiment of the present disclosure.

Referring to FIG. 1, the water drill lance 100 for extinguishing a fire in a container according to an embodiment of the present disclosure may include a clamp body 110 configured to be brought into close contact with a container door, a lock hook assembly 120 provided on the clamp body 110 and configured to be fixed to a locking rod, a drill module 130 configured to form a hole in the container door and to spray water through the hole, and a lance support 140 provided on the clamp body 110 and connected to an external lifting pole capable of performing a height adjustment.

First, the clamp body 110 is mounted on the container door such that the clamp body 110 is in close contact with the container door, and acts as a support body allowing the drill module 130 that will be described later to be stably mounted on the container door.

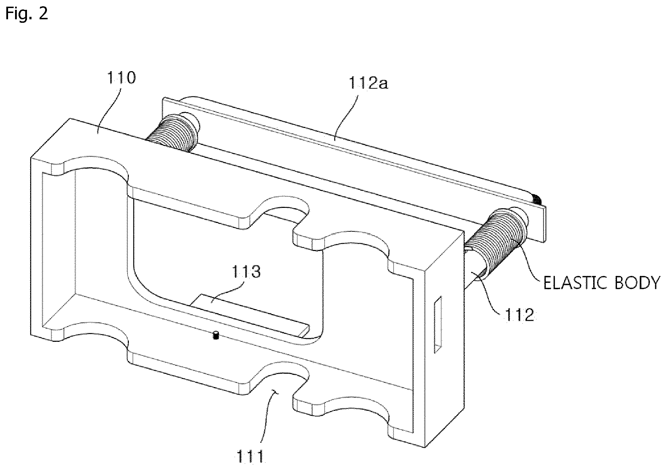

FIG. 2 is a view illustrating the clamp body 110 in more detail.

Referring to FIG. 2, a plurality of accommodating grooves 111 for accommodating a locking rod of the container in a longitudinal direction of the locking rod is formed in an upper side and a lower side of the clamp body 110. The accommodating groove 111 is formed such that the number and the position of accommodating grooves 111 match with the number and the position of the locking rods, and is formed in a shape corresponding to a circumferential shape of the locking rod such that the locking rod is in completely close in contact with the accommodating groove 111 without having a gap.

An open region through which a center drill 133 and a hole cutter 134 to be described later are introduced toward an inner side thereof is formed in a center portion of the clamp body 110. Furthermore, as the clamp body 110 is brought into close contact with the container door, the center drill 133 and the hole cutter 134 are capable of stably forming the hole in the container door.

Meanwhile, the lock hook assembly 120 configured to solidly fix the clamp body 110 in close contact with the container door so that the clamp body 110 is not separated from the container door is provided on an inner side of the clamp body 110.

The lock hook assembly 120 is provided on the inner side of the clamp body 110. Furthermore, the lock hook assembly is configured to be rotated and to be coupled to the locking rod of the container so as to solidly fix the clamp body 110 so that the clamp body 110 is not moved, and is configured to be released from the locking rod such that the clamp body 110 is separated from the locking rod.

Such a lock hook assembly 120 includes a rotation guide 121, a lock hook 122, a shaft 123, and a trigger 124.

The rotation guide 121 is positioned on the open region formed in the clamp body 110, and may serve as a shaft such that the lock hook 122 is capable of being rotated with respect to the rotation guide 121 as the shaft.

The lock hook 122 is formed in a hook shape. Furthermore, the lock hook 122 may be rotated in a first side direction such that the lock hook 122 is locked on and coupled to the locking rod, or may be rotated in an opposite direction such that the lock hook 122 is separated from the locking rod. When a first side of the lock hook 122 is pushed by the shaft 123, the lock hook 122 is rotated toward the locking rod with respect to the rotation guide 121 as the shaft. Conversely, when the shaft 123 is pulled, the lock hook 122 is rotated in the opposite direction with respect to the rotation guide 121 as the shaft, so that the lock hook 122 is rotated away from the locking rod.

A first side of the shaft 123 is connected to the lock hook 122, and a second side of the shaft 123 is connected to the trigger 124. According to a rotation direction of the trigger 124, the shaft 123 may be moved rectilinearly toward a direction in which the shaft 123 pushes the lock hook 122, or may be moved rectilinearly toward a direction in which the lock hook 122 is pulled.

The trigger 124 is a type of switch for rotating the lock hook 122, and a first end of the trigger 124 is connected to the shaft 123. When a distal end portion of the trigger 124 is positioned at an upper side position, the shaft 123 is in a pulled state. In this situation, the lock hook 122 is in a state in which the lock hook 122 is rotated in a direction in which the lock hook 122 is rotated away from the locking rod. This situation corresponds to a situation in which the clamp body 110 is mounted on the container door.

Conversely, when the distal end portion of the trigger 124 is pulled downward, the shaft 123 is in a pushed state. In this situation, the lock hook 122 is in a state in which the lock hook 122 is rotated in a direction in which the lock hook 122 is rotated so as to be positioned close to the locking rod with the rotation guide 121 as the shaft. Accordingly, as the lock hook 122 is locked on and coupled to the locking rod, the clamp body 110 may be solidly fixed to the container door. At this time, a wire allowing a worker to pull the trigger 124 downward may be connected to the distal end portion of the trigger 124.

Such a process will be described below.

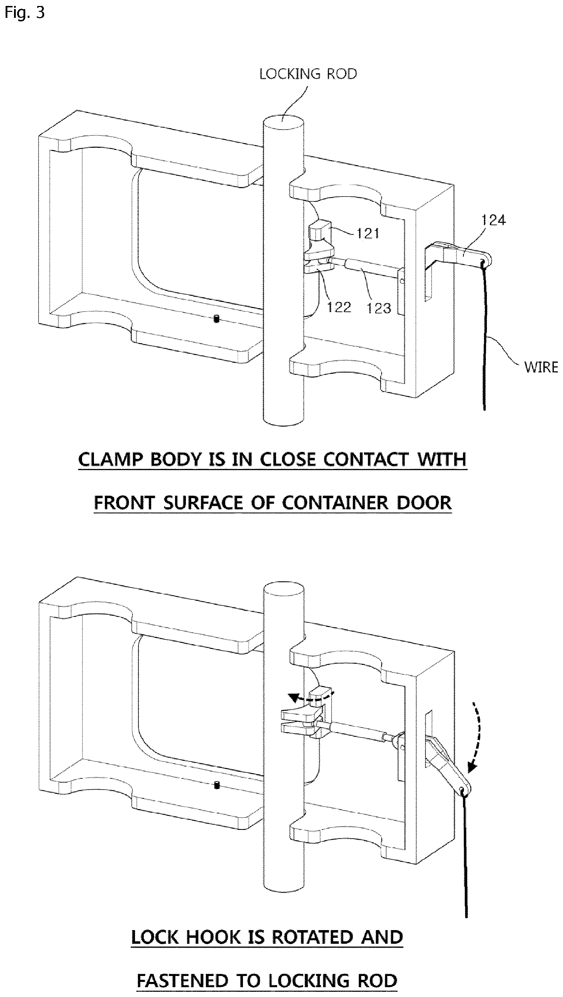

FIG. 3 is a view illustrating a process in which the lock hook assembly 120 is fixed to or released from the locking rod.

Referring to FIG. 3, in a state in which the clamp body 110 is not mounted on the container door, the trigger 124 is positioned at the upper side position, and the shaft 123 pulls the lock hook 122, so that the locking rod is coupled to the accommodating groove 111. In this state, as the worker pulls the wire, the trigger 124 is moved downward. Accordingly, the shaft 123 pushes the lock hook 122, so that the lock hook 122 is rotated and coupled to the locking rod.

When the trigger 124 is required to be moved upward again, a locking mechanism 141 positioned on a lower side of the trigger 124 touches the trigger 124 upward such that the trigger 124 is moved upward. The locking mechanism 141 will be described later when the lance support 140 that will be described later is described.

The drill module 130 is provided outside the clamp body 110 such that the drill module faces the container door. Furthermore, the drill module 130 may serve to form a hole in the container door by using water injected from outside, and may serve to extinguish a fire inside the container by injecting water through the hole. The drill module 130 will be described below.

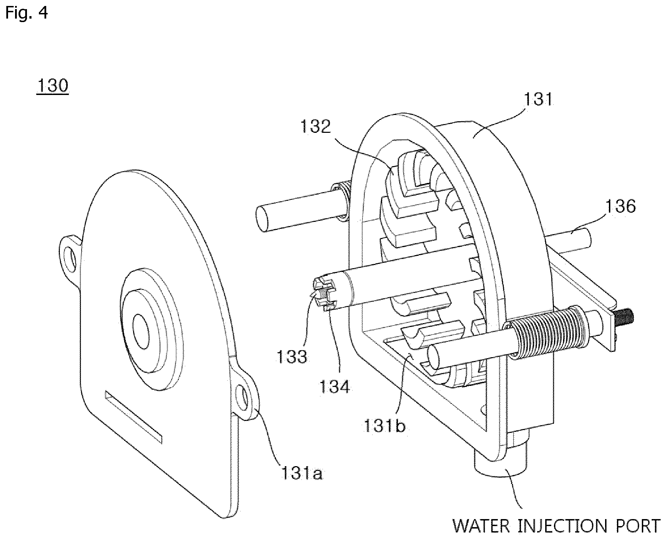

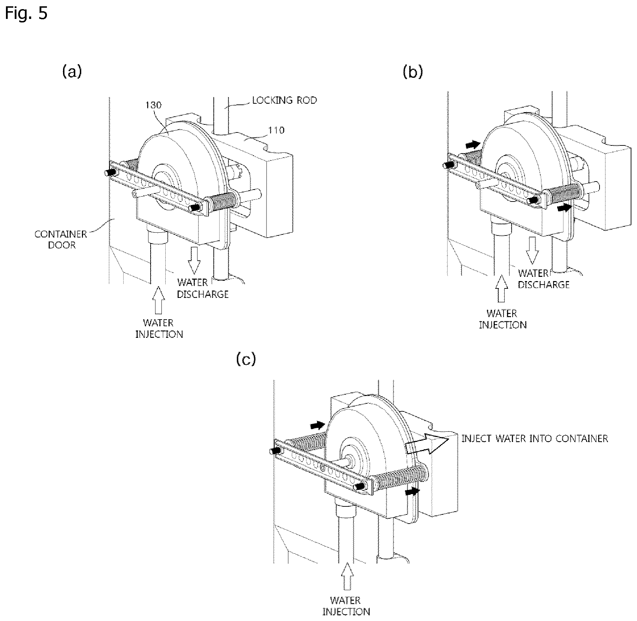

FIG. 4 is a view illustrating the drill module 130 in more detail, and FIG. 5 is a view illustrating a process of forming a hole in the container door by using the drill module 130.

Referring to FIG. 4 to FIG. 5, the drill module 130 may include a housing 131, an impeller 132, the center drill 133, the hole cutter 134, a bearing cover 135, and a drill guide shaft 136.

The housing 131 is provided outside the clamp body 110, and the impeller 132, the center drill 133, and the hole cutter 134 are accommodated in an inner side of the housing 131. In addition, a water injection port for injecting water into the inner side of the housing 131 is provided in a first side of the housing 131, and the impeller 132 in the housing 131 is configured to be rotated by hydraulic pressure of water injected through the water injection port. A rotational force of the impeller 132 is directly transferred to the center drill 133 and the hole cutter 134, and the center drill 133 and the hole cutter 134 perforate the container door by hydraulic pressure as a result.

Water injected through the water injection port provided in the housing 131 is rotated along an inner wall of the housing 131 and, at this time, rotates the impeller 132.

The impeller 132 is rotated by hydraulic pressure and generates a rotational force, and rotates the center drill 133 and the hole cutter 134 by the rotational force.

The center drill 133 protrudes so that the center drill 133 is brought into close contact with the container door first, and perforates the container door by being rotated by the rotational force of the impeller 132 so that a center hole is formed in the container door.

When the center hole having a predetermined depth is formed by the center drill 133, the hole cutter 134 perforates the container door by being rotated by the rotational force of the impeller 132, so that a fire-extinguishing hole is formed in the container door. Since a diameter of the fire-extinguishing hole is larger than a diameter of the center hole, a large amount of water is capable of being injected into the container through the fire-extinguishing hole, so that the fire may be more effectively extinguished.

Meanwhile, water injected through the water injection port is required to be discharged to the outside until the hole is formed in the container door by the center drill 133 and the hole cutter 134. For this purpose, a drain hole 131b may be formed in a lower side of the housing 131.

In addition, the housing 131 is gradually moved toward the clamp body 110 from outside the clamp body 110 on the basis of an elastic force of an elastic body, so that the center drill 133 and the hole cutter 134 are capable of continuously perforating the container door, which will be described below.

A pair of sliding guides 112 protrudes toward the housing 131 on an outer side of the clamp body 110, and a pair of sliding wings 131a configured to be coupled to the pair of sliding guides 112 is formed on an outer side of the housing 131.

The housing 131 is moved away from or moved close to the clamp body 110 as the housing 131 is moved rectilinearly along the sliding guides 112. Particularly, a guide channel 112a for preventing the housing 131 from being separated from the pair of sliding guides 112 is provided on end portions of the pair of sliding guides 112. Therefore, even when the housing 113 is moved away from the clamp body 110, the housing 113 is caught by the guide channel 112a and is not separated to the outside.

In addition, an elastic body having an elastic force is provided between the guide channel 112a and the pair of slide wings 131a. A state in which the housing 131 is always in close contact with the clamp body 110 is maintained as the elastic body pushes the pair of slide wings 131a by using the elastic force thereof.

When the clamp body 110 is mounted on the container door, the housing 131 is moved rectilinearly along the sliding guides 112 due to the center drill 133 that protrudes relatively more than the housing 131, so that the housing 131 is positioned away from the clamp body 110. In this situation, the elastic body is in a compressed state, so that the elastic force is formed in the elastic body.

In this state, as the impeller 132 is rotated by the hydraulic pressure, the center drill 133 and the hole cutter 134 are rotated and the hole is gradually formed in the container door, so that the center drill 133 and the hole cutter 134 penetrate the container door. This is possible because the elastic body always pushes the housing 131 toward the clamp body 110 by the elastic force.

Meanwhile, the drain hole 131b for discharging water injected into the housing 131 to be discharged to the outside until the hole is formed by the center drill 133 and the hole cutter 134 is formed in the lower side of the housing 131.

The drain hole 131b serves as a type of water discharge port that allows the injected water to be discharged to the outside until the hole is drilled by the center drill 133 and the hole cutter 134. At this time, in order to prevent water injected through the water injection port from being discharged to the outside through the drain hole 131b after the hole is formed by the center drill 133 and the hole cutter 134, a drain plate 113 configured to cover the drain hole 131b is formed on the clamp body 110.

The drain plate 113 protrudes from the outer side of the clamp body 110 toward the drain hole 131b, and does not cover the drain hole 131b when the housing 131 is in a state in which the housing 131 is positioned away from the clamp body 110. However, when the housing 131 is gradually moved close to and is brought into close contact with the clamp body 110 due to the elastic force of the elastic body during the process in which the center drill 133 and the hole cutter 134 perforates the container door, the drain plate 113 gradually blocks the drain hole 131b, so that water is not discharged through the drain hole 131b but is guided to be introduced into the container through the fire-extinguishing hole.

That is, when the center drill 133 and the hole cutter 134 perforates the container door and the housing 131 is gradually moved close to the clamp body 110, the drain plate 113 naturally covers the drain hole 131b, so that water injected into the housing 131 is capable of being naturally injected into the inside of the container through the fire-extinguishing hole.

The lance support 140 is connected to a first side of the clamp body 110, is connected to an external lifting pole that is capable of performing a height adjustment, and is capable of being used when the clamp body 110 is required to be mounted on a container door positioned at a high position.

More specifically, the lance support 140 does not have a connection structure in which the lance support 140 is completely fixed to the clamp body 110 and the lance support 140 is not capable of being moved, but has a connection structure in which the lance support 140 is connected to a connection part and the lance support 140 is capable of being partially rotated at a predetermined angle, so that the lance support 140 is rotated downward at the predetermined angle with the connection part as a shaft when the worker pulls the lifting pole downward.

The locking mechanism 141 may protrude on the lance support 140 such that the locking means 141 faces the lower side of the trigger 124 described above. At this time, after the fire is extinguished, when the lifting pole is partially moved downward by rotating a lifting handle on a lifting pole device in the opposite direction, a fixed state of a gear may be released. In this state, when the lifting pole is partially moved upward by rotating the lifting handle, the locking mechanism 141 of the lance support 140 moves the trigger 124 upward, so that a coupled state of the lock hook 122 is released, thereby being capable of easily separating the clamp body 110 from the container. The lifting pole connected to the lance support 140 may be used when the clamp body 110 is required to be mounted on a container door of a container positioned on a middle floor or a high floor among a plurality of stacked containers.

Meanwhile, the lifting pole connected to the lance support 140 will be described below.

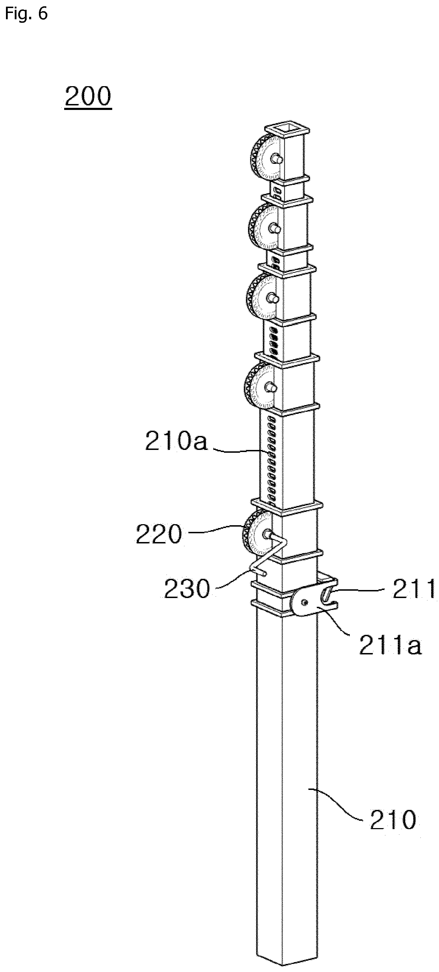

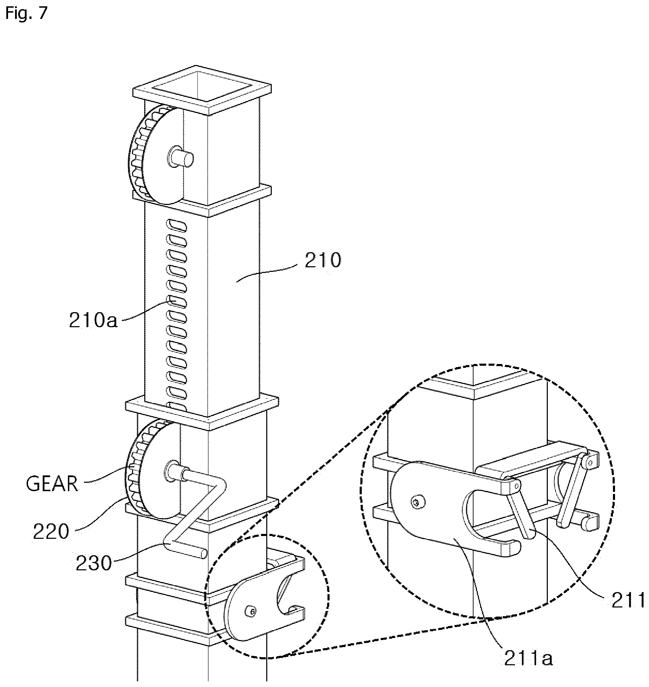

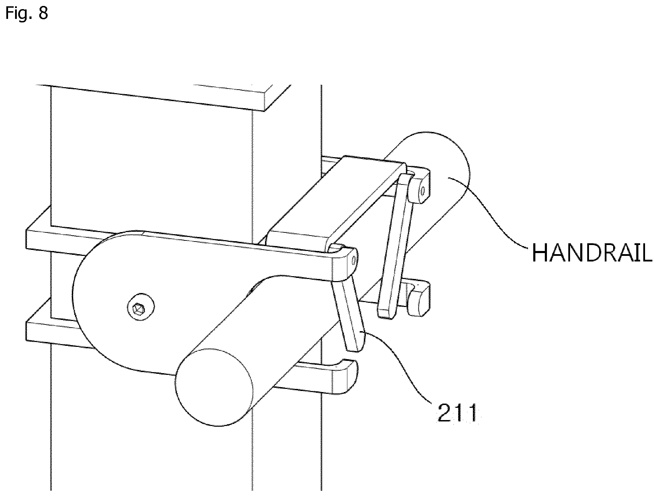

FIG. 6 is a view illustrating a structure of a lifting pole device 200 for adjusting a height of a water drill lance, FIG. 7 is a view illustrating a lifting pole 210 and a lock bar 211 in more detail, and FIG. 8 is a view illustrating a state in which the lock bar 211 is fixed to a handrail.

Referring to FIG. 6 to FIG. 8, the lifting pole device 200 for adjusting the height of the water drill lance may include a multi-stage lifting pole 210 connected to the lance support of the water drill lance, a gear assembly 220, and a lifting handle 230.

First of all, the lifting pole 210 may be formed in a multi-stage shape by being formed in a telescopic manner. Through this, the height of the lifting pole 210 is capable of being adjusted, so that the water drill lance 100 for extinguishing the fire in the container is capable of being mounted regardless of the height by using the lifting pole 210.

Respective rectangular pipes having diameters different from each other may be applied to such a multi-stage lifting pole 210, and the multi-stage lifting pole 210 has a shape in which a diameter of the multi-stage lifting pole 210 is gradually decreased from a lowermost stage of the multi-stage lifting pole 210 toward an uppermost stage of the multi-stage lifting pole 210.

Particularly, the lance support 140 is connected to the uppermost stage of the lifting pole 210, and the lock bar 211 for fixing the lifting pole 210 to the handrail that is mounted on a front surface of the container door is provided on the lowermost stage of the lifting pole 210.

The lock bar 211 is fixed to the lowermost stage of the lifting pole 210 by a fixing bracket 211a. Particularly, the lock bar 211 is configured such that a height of the lock bar 211 is capable of being adjusted along the lowermost stage of the lifting pole 210 when a fixed state of the fixing bracket 211a is released.

Referring to FIG. 8, in a state in which the lock bar 211 is mounted on the handrail which is formed in a horizontal bar shape and which is mounted on the front surface of the container door, the lock bar 211 is capable of being solidly fixed to the handrail as a locking mechanism of the lock bar 211 is rotated downward. Particularly, since the locking mechanism of the lock bar 211 is capable of being maintained in a state in which the locking mechanism is rotated downward at all times by the weight thereof, the lock bar 211 may be maintained in the state in which the lock bar 211 is solidly fixed to the handrail unless the worker directly rotates the locking mechanism of the lock bar 211 upward. By the fixing of the lock bar 211, the lifting pole 210 is capable of maintaining a vertical state without falling down.

Meanwhile, the gear assembly 220 is provided on an upper side of each stage of the lifting pole 210.

The gear assembly 220 is provided on the upper side of each stage of the lifting pole 210, and is engaged with and coupled to a gear groove 210a formed on a side surface of the other lifting pole 210 (referring to a lifting pole having a smaller diameter) inserted into an inner side of the lifting pole 210 via a gear.

At this time, the gear may be provided with a rotation stopping mechanism configured to stop a rotation of the gear after the gear is rotated in one direction. Therefore, a state in which the other lifting pole 210 inserted into the inner side of the lifting pole 210 is pulled upward is capable of being maintained by the gear.

At this time, the lifting handle 230 for rotating an inner gear is provided on a first side of the gear assembly 220.

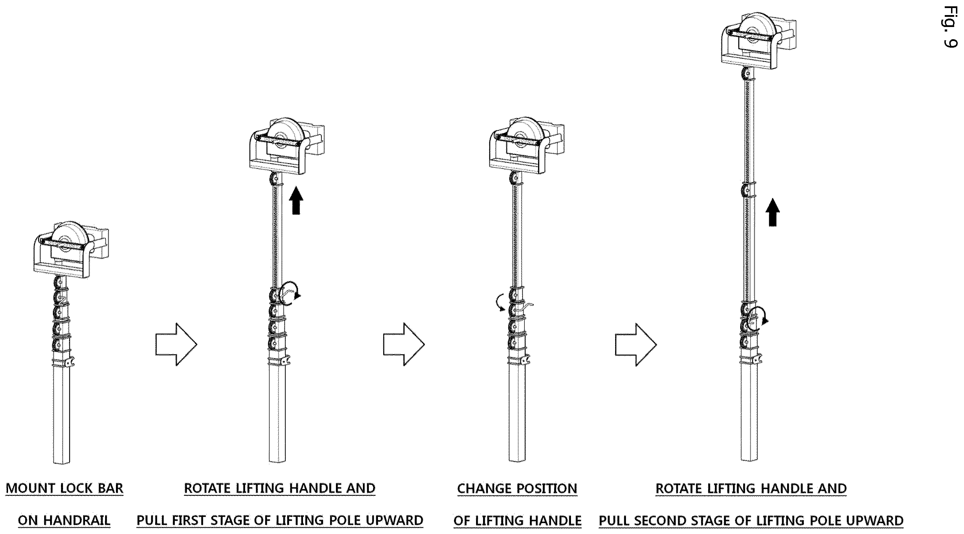

FIG. 9 is a view illustrating a process of adjusting the height of the lifting pole 210 by using the lifting handle 230.

Referring to FIG. 9, since the lifting handle 230 is formed such that the lifting handle 230 is capable of being separated from the gear assembly 220, the lifting handle 230 is not provided on each gear assembly 220. Furthermore, after the uppermost stage of the lifting pole 210 is pulled upward, the lifting handle 230 is separated from the corresponding gear assembly 220, the lifting handle 230 is coupled to the gear assembly 220 of a lower stage of the lifting pole 210 (referring to the lifting pole having a diameter that is one size wider) positioned below the uppermost stage of the lifting pole 210, and then a process of pulling the corresponding lifting pole 210 upward is performed again.

Conversely, when each stage of the lifting pole 210 is required to be inserted, the lifting pole 210 inside the lowermost stage of the lifting pole 210 is inserted by coupling the lifting handle 230 to the lowermost stage of the lifting pole 210 and rotating the lifting handle 230 in the opposite direction. As this process is repeated, all stages of the lifting pole 210 are returned to original states thereof.

Next, an overall process of extinguishing a fire in a container by using the water drill lance for extinguishing the fire in the container described above will be described.

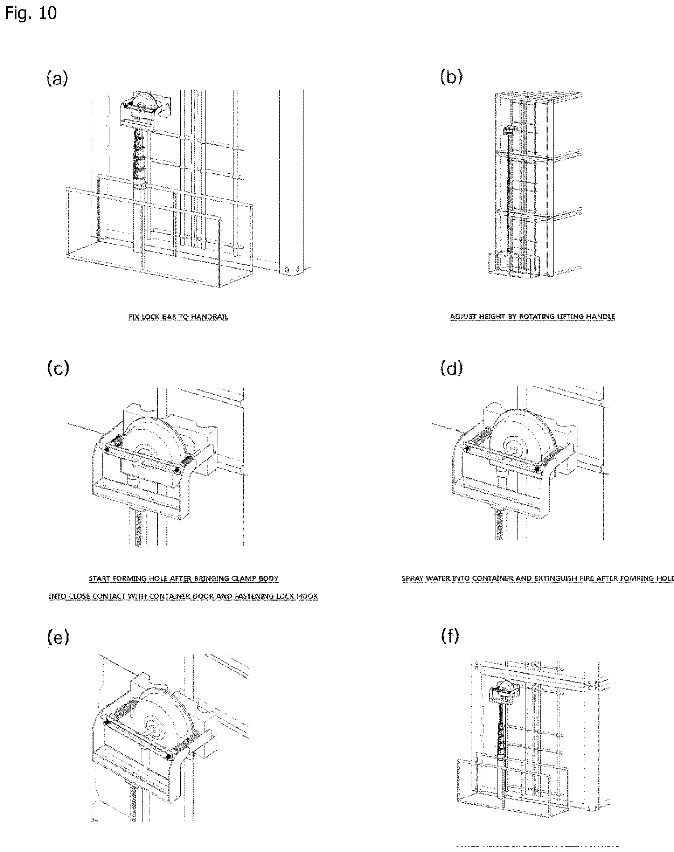

FIG. 10 is a view sequentially illustrating the overall process of extinguishing the fire in the container by using the water drill lance for extinguishing the fire in the container.

Referring to FIG. 10, first, the lifting pole 210 is positioned on the handrail mounted on the front surface of the container door, and the lock bar 211 is fixed to the handrail.

In this state, the lifting handle 230 is connected to the gear assembly 220 provided on the lowermost stage of the lifting pole 210 and then is rotated, so that the inner side of the lifting pole 210 engaged with the gear in the gear assembly 220 is pulled upward and the height of the lifting pole is increased by one stage. As this process is repeated, the water drill lance for extinguishing the fire connected to the uppermost stage of the lifting pole 210 is capable of being moved to a height of the container door where the fire occurs.

In a state in which the water drill lance 100 for extinguishing the fire in the container is positioned on the front surface of the container door where the fire occurs, the clamp body 110 is brought into close contact with the container door. Furthermore, as the wire connected to the trigger 124 of the lock hook assembly 120 is pulled downward, the lock hook 122 is locked on the locking rod, so that the clamp body 110 is solidly fixed to the container door.

In this state, as water is supplied through the water injection port of the housing 131, the impeller 132 is rotated, and the center drill 133 connected to the impeller 132 is rotated, so that the center drill 133 forms the center hole in the container door. At this time, the center drill 133 is capable of being in close contact with the container door by the elastic force of the elastic body. After the center hole is formed, the hole cutter 134 is brought into close contact with the container door, and the hole cutter 134 forms the fire-extinguishing hole in the container door.

When the forming of the fire-extinguishing hole is finished, the drain hole 131b is blocked by the drain plate 113, so that water injected through the water injection port is not discharged through the drain hole 131b but injected and sprayed inside the container through the fire-extinguishing hole, thereby performing extinguishing of the fire inside the container.

After the extinguishing of the fire is finished, the locking mechanism 141 provided on the lance support 140 pushes the trigger 124 upward by rotating the lifting handle 230 such that the lifting pole 210 is moved upward by two to three levels, so that the lock hook 122 coupled to the locking rod is released and the clamp body 110 is capable of being easily separated from the container door.

After the clamp body 110 is separated from the container door, the lifting handle 230 is connected to the gear assembly 220 provided on the lowermost stage of the lifting pole 210 and then the lifting handle 230 is rotated, so that the inner side of the lifting pole 210 engaged with the gear of the gear assembly 220 is inserted and the height of the lifting pole 210 is decreased by one level. As this process is repeatedly performed, the removal of the water drill lance 100 for extinguishing the fire in the container is finished.

Although the exemplary embodiments of the present disclosure have been described above, it may be understood by those skilled in the art that a variety of modifications and changes may be made without departing from the concept and scope of the present disclosure disclosed within the range of the following claims.

### Industrial applicability

According to the present disclosure, a fire in a container loaded on a ship or at a port is capable of being rapidly and safely extinguished, so that the present disclosure is a technology to be widely used in the shipbuilding and marine industry and in the firefighting industry, thereby being capable of realizing practical and economic values thereof.

## Claims

1. A water drill lance for extinguishing a fire in a container, the water drill lance comprising:
a clamp body (110) configured to be brought into close contact with a container door;
a lock hook assembly (120) provided on the clamp body (110), the lock hook assembly (120) being configured such that the lock hook assembly (120) is fixed to or released from a locking rod of the container by being rotated;
a drill module (130) provided on the clamp body (110), the drill module (130) being configured to form a hole in the container door by using water injected from outside and to spray water inside the container through the hole; and
a lance support (140) connected to the clamp body (110), the lance support (140) being configured to be connected to an external lifting pole capable of performing a height adjustment.

2. The water drill lance of claim 1, wherein an accommodating groove (111) for accommodating the locking rod in a longitudinal direction of the locking rod is formed in the clamp body (110).

3. The water drill lance of claim 1, wherein the lock hook assembly (120) comprises:
a rotation guide (121) provided on an inner side surface of the clamp body (110);
a lock hook (122) connected to the rotation guide (121) by a shaft, the lock hook (123) being configured to be locked on and released from the locking rod by being rotated;
a shaft (123) connected to the lock hook (122) and configured to push or pull the lock hook (122); and
a trigger (124) having a first side end portion connected to the shaft (123) and having a center portion connected to the clamp body (110) by a shaft, the trigger (124) being configured to push or pull the shaft (123) according to a direction in which a second side end portion of the trigger (124) is rotated, and
wherein, as the trigger (124) is rotated from an upper side position to a lower side position, the shaft (123) pushes the lock hook (122), and the lock hook (122) is rotated with respect to the rotation guide (121), so that the lock hook (122) is locked on the locking rod.

4. The water drill lance of claim 3, wherein a wire for pulling the trigger (124) downward is connected to the second side end portion of the trigger (124).

5. The water drill lance of claim 4, wherein the lance support (140) is provided with a locking mechanism (141) that protrudes on a first side of the lance support (140) such that the locking mechanism (141) is positioned below the trigger (124),
the lance support (140) is configured to be rotated at a predetermined angle with respect to the clamp body (110) in a state in which the lance support (140) is connected to the clamp body (110), and
when the lance support (140) is rotated, the locking mechanism (141) pushes the second side end portion of the trigger (124) upward, and the shaft (123) pulls the lock hook (122), so that the lock hook (122) is rotated with respect to the rotation guide (121) and is released from the locking rod.

6. The water drill lance of claim 1, wherein the drill module (130) comprises:
a housing (131) in which water is injected therein;
an impeller (132) provided in the housing (131) and configured to generate a rotational force by being rotated by water that is injected into the housing (131);
a center drill (133) connected to the impeller (132), the center drill (133) being configured to form a center hole in the container door by the rotational force of the impeller (132) while being in a state in which the center drill (133) is in close contact with the container door;
a hole cutter (134) connected to the impeller (132) and configured to form a fire-extinguishing hole for injecting water into the container by the rotational force of the impeller (132);
a bearing cover (135) covering a bearing provided between the housing (131) and the impeller (132); and
a drill guide shaft (136) connected to the center drill (133).

7. The water drill lance of claim 6, wherein a pair of sliding guides (112) that protrudes toward the housing (131) is formed on an outer side of the clamp body (110),
wherein a pair of slide wings (131a) coupled to the pair of sliding guides (112) is formed on an outer side of the housing (131), and
wherein, in a state in which the pair of slide wings (131a) is coupled to the pair of sliding guides (112), the drill module (130) is configured to be slidably moved along the pair of sliding guides (112) such that the drill module (130) is moved away from or moved close to the clamp body (110).

8. The water drill lance of claim 7, wherein a guide channel (112a) preventing the housing (131) from being separated from the pair of sliding guides (112) is provided on distal end portions of the pair of sliding guides (112).

9. The water drill lance of claim 8, wherein an elastic body is provided between the guide channel (112a) and the pair of slide wings (131a), and
wherein a state in which the housing (131) is in close contact with the clamp body (110) is maintained by an elastic force of the elastic body.

10. The water drill lance of claim 9, wherein, when the clamp body (110) is brought into close contact with the container door, the center drill (133) is brought into contact with the container door, and the housing (131) is spaced apart from the clamp body (110), and
wherein, in a process in which the container door is perforated by the center drill (133) and the hole cutter (134), a separation distance between the housing (131) and the clamp body (110) is gradually reduced and the housing (131) is brought into close contact with the clamp body (110) by the elastic force of the elastic body.

11. The water drill lance of claim 10, wherein a drain hole (131b) for discharging water injected into the housing (131) to the outside when the impeller (132) is rotated is provided on a lower side of the housing (131).

12. The water drill lance of claim 11, wherein a drain plate (113) is provided on the outer side of the clamp body (110), the drain plate (113) being configured to block the drain hole (131b) when the separation distance between the housing (131) and the clamp body (110) is gradually reduced and the housing (131) is brought into close contact with the clamp body (110) by the elastic force of the elastic body during the process in which the container door is perforated by the center drill (133) and the hole cutter (134), thereby guiding water injected into the housing (131) not to be discharged through the drain hole (131b) but to be injected inside the container through the fire-extinguishing hole.
